# EUROPEAN PATENT APPLICATION

(11) **EP 0 645 706 A2**
(43) Date of publication of application: **29.03.1995**
(21) Application number: 94303913.1
(22) Date of filing: 31.05.1994
(51) Int. Cl.: G06F 11/00

(54) **Information processing system with a service processor**

(30) Priority: 20.09.1993 JP 257584/93
(71) Applicant: FUJITSU LIMITED, Kawasaki-shi, Kanagawa 211 (JP)
(72) Inventor: Kawano, Kayoko, c/o Fujitsu Limited, Kawasaki-shi, Kanagawa 211 (JP); Sugiura, Satoshi, c/o Fujitsu Limited, Kawasaki-shi, Kanagawa 211 (JP); Takaki, Yasushi, c/o Fujitsu Limited, Kawasaki-shi, Kanagawa 211 (JP)
(74) Representative: Godsill, John Kenneth

(57) **Abstract**

An information processing system has a plurality of information processing units. Each information processing unit has a system console interface control unit (SCI) connected to an information processing unit body (COM) and a service processor (SVP). The plurality of system console interface control units (SCI) are connected each other in a ring fashion. Each system console interface control unit (SCI) has a processing means (80) for processing an interface between the self service processor (SVPO) and the other-information processing unit body (COM1).

## Description

The present invention relates to information processing systems and more particularly to information processing systems using a plurality of information processing units.

An information processing system may have a plurality of information processing units which communicate with one another. Each unit has a main information processing section which performs the processing information function *per se* and is referred to hereinafter as an information processing unit body. At least some of the units may additionally have a so-called service processor to provide the information processing unit bodies with services such as microprogram loading or error processing. The following methods may be employed to allow the service processors to service the information processing unit bodies. One method has a plurality of system console interface control units which control interface or clock generation between a service processor and an information processing unit body. Each system console interface control unit is connected to at least one of the information processing unit body and a service processor if necessary. The system console interface control units are also bus-connected to one another.

As a method to bus-connect the system console control units, a so-called "point-to-point method" which connects each of the system console interface control units has been proposed.

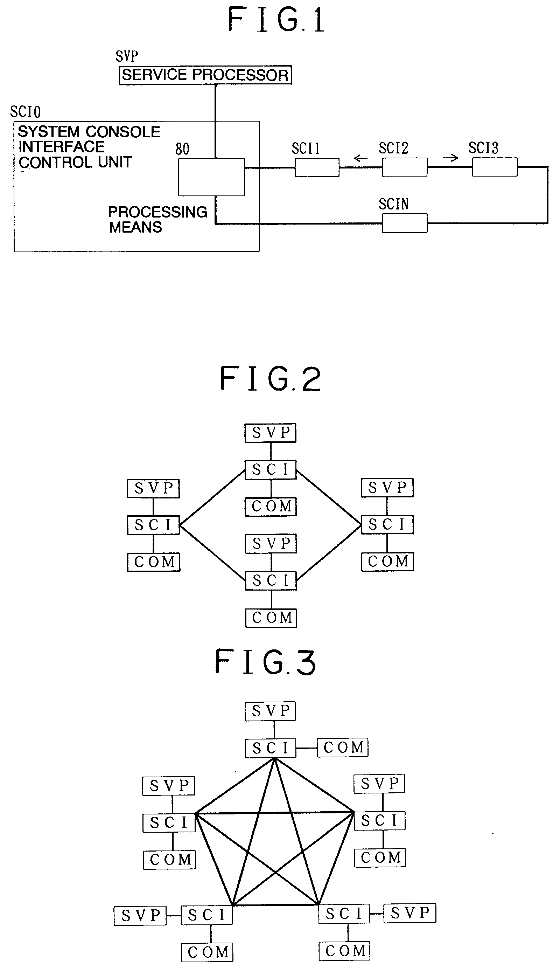

Fig. 3 of the accompanying drawings shows the connection according to this previously-considered method when the number of service processors is equal to that of information processing unit bodies. However, if the system console interface control units are connected in that way by this "point-to-point method", when the number of service processors and information processing unit bodies is denoted by "m", the number of signal lines necessary for the connection is denoted by "^{m}C₂". This means the connection will be physically difficult if the number of service processors and information processing units increases.

According to one aspect of the present invention, there is provided an information processing system which comprises a plurality of information processing units each of which comprises an information processing unit body for processing predetermined information, a service processor for servicing microprogram loading and/or error processing for the information processing unit body and a system console interface control unit for connecting said information processing unit body with the service processor of another information processing unit the system console interface control units being connected in ring fashion.

According to another aspect of the invention there is provided an information processing system comprising a plurality of interconnected information processing stations, each processing station comprising an information processing section, for processing data, and an interface unit, for interconnecting the processing stations, at least one of the processing stations further comprising a service unit to provide a service for the information processing sections, characterised in that the information processing unit stations are interconnected by bus means in such a way as to form a closed loop, enabling the or each service unit to communicate with any one of the information processing sections.

Embodiments of the present invention may be defined in such a way to exhibit one or some of the following features:
an information processing system which connects system console interface control units by fewer signal lines than in previously-considered systems;
high reliability and transmission efficiency;
an information processing system in which processing means are provided in a system console interface control unit SCI so that interconnections by a ring-fashioned bus are made;
an information processing system in which processing means allow logical bidirectional access processing, so that even if the bus of one direction has failed access processing is available by a bus of another direction, i.e. a transmission reliability is improved;
an information processing system in which multiple access is available as long as a transmission line necessary for the access processing is not occupied, even if a plurality of access processing orders are issued, i.e. transmission efficiency is improved.

Reference will now be made, by way of example, to the accompanying drawings, in which:
Fig. 1 is a schematic diagram of an embodiment of the present invention;
Fig. 2 is a schematic diagram of an embodiment of the present invention;
Fig. 3 is a schematic diagram of a previously-considered point-to-point connection method;
Fig. 4 is a schematic diagram of an embodiment of the present invention;
Fig. 5 is a flow chart showing an operation of a process output means of Fig. 4;
Fig. 6 is a flow chart showing an operation of a process input means of Fig. 4;
Fig. 7 is a flow chart showing an operation of a process relay means.
Fig. 8 is a schematic diagram showing a flow of the signal in the example 1 of the embodiment; and,
Fig. 9 is a chart showing a flow of the signal in the example 2 of the embodiment.

An embodiment of the present invention will now be described with reference to the accompanying drawings. This embodiment is constructed as an information processing system comprising a plurality of information processing units connected by a plurality of buses and each unit comprising a service processor SVP, a system console interface control unit SCI and an information processing unit body COM.

In Fig. 1 the system console interface control units SCI are connected to one another in a ring fashion. Also, each system console interface control unit SCI includes a processing means 80, for processing interface between a service processor SVP and another information processing unit body COM. This processing means 80 could have a process output means 80a, a process input means 80b and a process relay means 80c described in more detail below.

Process output means 80a in a first information processing unit receives an access processing order for an information processing unit body COM of a second information processing unit from a service processor SVP associated with the first unit, and request use of the bus in two transmission directions, i.e. logical first and second (opposite) sides referred to herein as a logical one side and an other side. The processing output means 80a then proceed with the access processing in the transmission direction which first permits use of the bus.

Process input means 80b, in a first information processing unit receives an access processing order for the information processing unit body COM of the first unit from either the logical one side or the logical other side and proceed with the access processing in the transmission direction from which the access process order is transmitted.

Process relay means 80c, in a first information processing unit receives an access processing order for an information processing unit can, in a second unit, from either the logical one side or the logical other side and request use of the bus in the direction logically opposite to the direction from which the access processing order was received. The process relay means 80c then relays the access processing when use of the bus is permitted.

The process input means 80b can also be configured as follows.
(1) An identification number is given to a system console interface control unit SCI and a priority order of system console interface-control units based on this identification number is determined. Then, when an access processing order is received simultaneously from two directions, i.e. logical one side and logical other side, the access processing order transmitted from the system console interface control unit SCI having the highest priority is processed before the others.
(2) When the access processing order is received from two transmission directions, i.e. logical one side and logical other side simultaneously, the access processing order from the logical transmission direction has the priority to be processed.
(3) When the access processing order is received from two transmission direction, i.e. logical one side and logical other side simultaneously, the access processing order from the logical other transmission direction is processed prior to the others.

In the configuration described above, the processing means 80, the process output means 80a, the process input means 80b and the process relay means 80c may consist of a central processing unit (CPU) or a microprocessor. The service processor SVP may consist of a personal computer or a WS (Work Station). The information processing unit body COM may consist of a large scale computer, or a super computer, with a central processing unit and a memory.

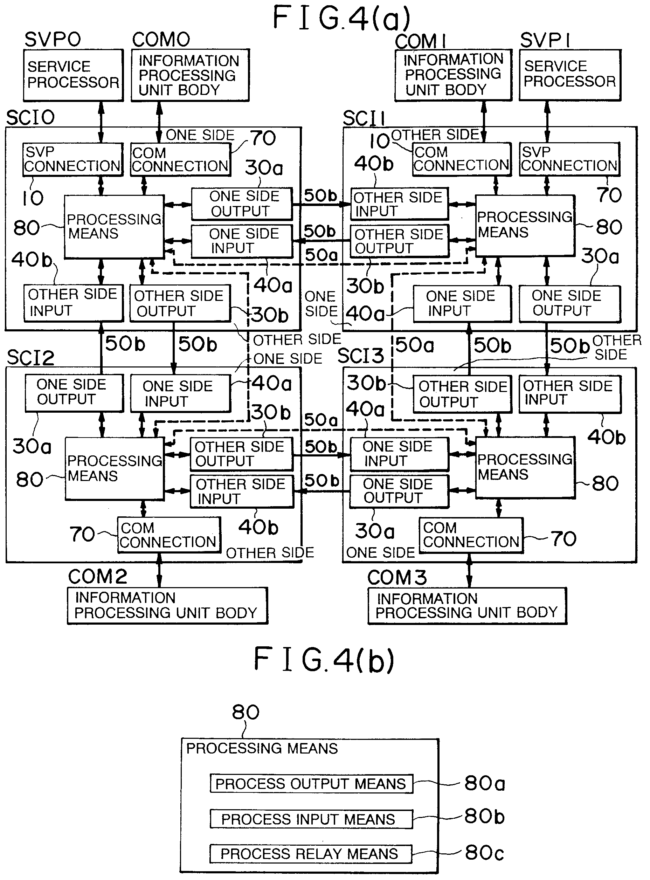

The logical one side and the logical other side in embodiments of the present invention will be described with reference to Fig. 4. The logical one side indicates a transmission direction from SCIO to SCI1 and from SCI1 to SCIO when the system console interface control unit SCI1 is logically connected to the system console interface control unit SCIO.

The logical other side indicates a transmission direction from SCIO to SCI2 and from SCI2 to SCIO when the system console interface control unit SCI1 is logically connected to the system console interface control unit SCI2. However, in this case, SCI1 should be different from SCI2.

In embodiments of the present invention, the processing means 80 provides an interface between the service processor SVP and the information processing unit body COM in another unit.

The following effects will be achieved if the processing means includes process output means 80a, processing input means 80b and process relay means 80c.

When an access processing order for the information processing unit body COM in another unit is received from the service processor in the same unit, bus use is requested in two transmission directions, i.e. the logical one side and the logical other side and access process proceeds in a transmission direction which first permits use of the bus.

When an access processing order for the information processing control unit body COM in the another unit is received from either transmission direction, i.e. the logical one side or the logical other side, access processing proceeds in a transmission direction from which the access processing is transmitted.

When an access processing order for the information processing control unit body COM is received from either transmission direction, i.e. the logical one side or the logical other side, bus use is requested in a direction logically opposite to the direction from which the access processing order has been transmitted and the access processing is relayed when the use of the bus is permitted.

Fig. 4(a) shows details of an information processing system according to the principles described with reference to Figs. 1 and 2. This system comprises two system console interface control units SCI0 and SCI1 connected to respective service processors SVP0 and SVP1 and body units COM0 and COM1, two system console interface control units SCI2 and SCI3 connected to respective body units COM2 and COM3 and a ring shaped bus 50 for connecting the four system console interface control unit SCI0 to SCI3 to each other. Such a system can be used, for example, for database retrieval.

As shown in Figs. 4(a) and (b), the system console interface control units SCI0 to SCI3 respectively comprise (1) SVP connection 10, (2) COM connection 70, (3) a "one side" input 40a, (4) an "another side" input 40b, (5) a "one side" output 30a, (6) an "other side" output 30b, (7) process output means 80a, (8) process unit means 80b and (9) process relay means 80c.

In this embodiment, the bus 50 consists of a control bus 50a and a data bus 50b.

Each part in the system console interface control unit SCI will be described in more detail below.

### (1) SVP connection 10

SVP connection 10 connects a service processor SVP such that the service processor SVP can input and output through an interface unit.

### (2) COM connection 70

COM connection 70 connects an information processing unit body COM such that the information processing unit body COM can input and output through the interface unit.

### (3) One side input 40a

One side input 40a inputs a transmission data from logical one side through a data bus 50b.

### (4) Other side input 40b

An other side input 40b inputs transmission data from a logical other side through the data bus 50b.

### (5) One side output 30a

One side output 30a outputs transmission data to the logical one side through the data bus 50b.

### (6) Other side output 30b

An other side output 30b outputs transmission data to the logical other direction through the data bus 50b.

### (7) Process output means 80a

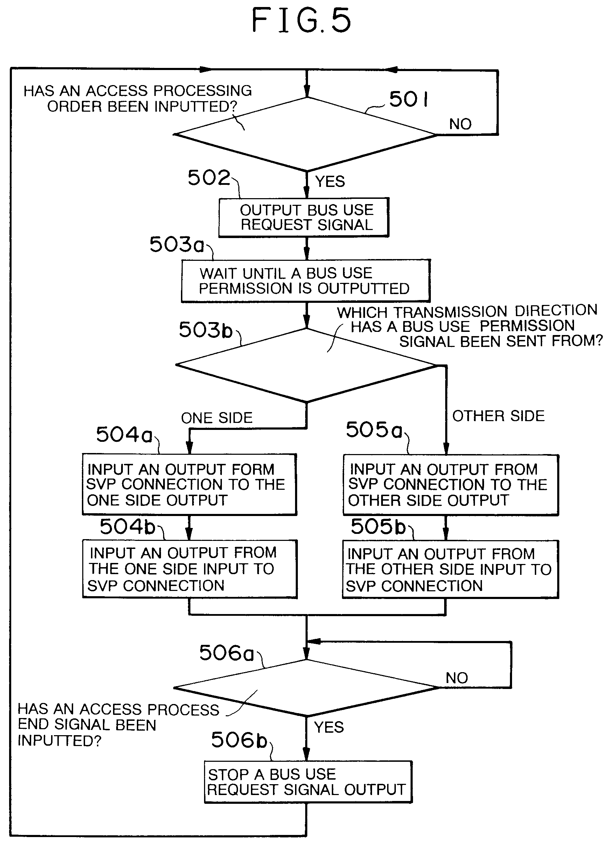

As shown in Fig. 5, a process output means 80a waits until an access processing order signal from the service processor SVP for the body unit COM connected thereto through the bus 50 (Step 501).
When the access processing order signal is inputted at the step 501, a bus use request is outputted to the logical side and the logical other side through a control bus 50a to acquire the authority for the use of the data bus 50b (Step 502) .

The process output means 80a then waits until a bus use permission is outputted (Step 503a). When the permission is outputted, the process is determined according to the outputted direction (Step 503b).

If the direction outputted at the step 502 is the logical one side, an output from the SVP connection 10 is inputted to the direction output 30a (Step 504a) and an output from the other side 40b is inputted to the SVP connection (Step 504b).

If the direction outputted at the step 502 is the logical other side, the output from the SVP connection 10 is inputted to the other side output 30b (Step 505a) and an output from the one side 40a is inputted to the SVP connection (Step 505b).

Finally, when an access processing end request signal is inputted (Step 506a), a bus use request signal output is stopped (Step 506b) and the process output means 80a goes back to the step 501.

### (8) Process input means 80b

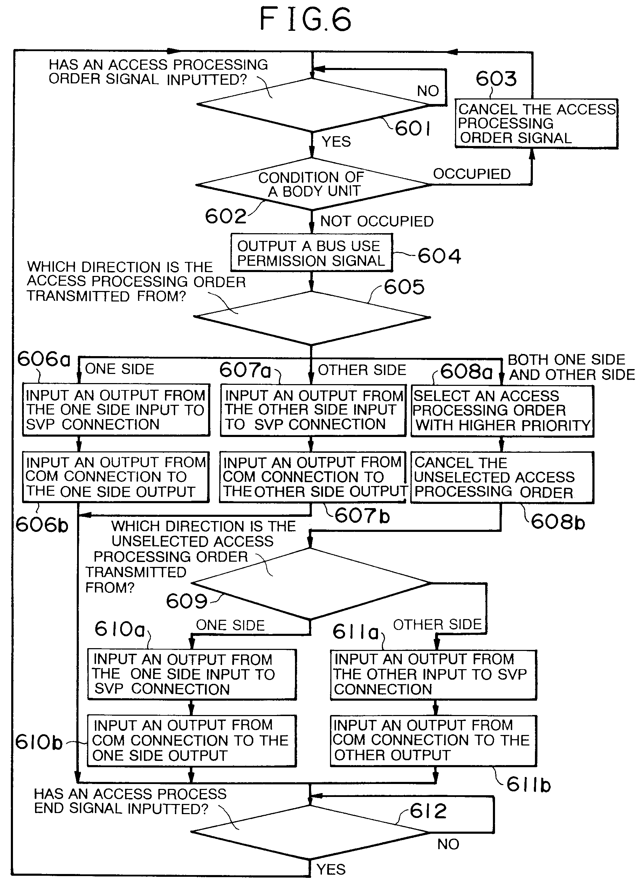

A process input means 80b, as shown in Fig. 6, waits until an access processing order from either transmission direction, i.e. the logical one side or the logical other side for the information processing unit body COM connected to a system console interface control unit SCI (Step 601).

When the access processing order is inputted at the step 601, the process is determined according to the condition of the body unit COM connected to COM connection 70 (Step 602).

If the body unit COM is occupied at the step 602, the access processing order is canceled (Step 603) and the process input means 80b goes back to the step 601.

If the body unit COM is not occupied at the step 602, the bus use permission signal is outputted to the direction from which the access process request signal is outputted (Step 604).

The process is determined according to the direction from which the access processing order signal is transmitted (Step 605).

If the direction from which the access processing order signal is transmitted at the step 605 is the logical one side, an output from the one side input 40a is inputted to the SVP connection 10 and the COM connection 70 (Step 606a) and an output from the COM connection 70 is inputted to the one side output 30a (Step 606b).

If the direction from which the access processing order signal is transmitted at the step 605 is the logical other side, an output from the other side input 40b is inputted to the SVP connection 10 and the COM connection 70 (Step 607a) and an output from COM connection 70 is inputted to the other side output 30b (Step 607b).

If the direction from which the access processing order signal is transmitted at the step 605 is both the logical and the logical other side, the access processing order transmitted from the direction having a higher priority determined by a certain identification number (Step 608a) is selected and the unselected access processing order is canceled (Step 608b). The process is determined according to the direction from which the selected access processing order signal is transmitted (Step 609).

If the direction from which the access processing order signal is transmitted at the step 609 is the logical one side, the output from the one side input 40a is inputted to the SVP connection 10 and the COM connection 70 (Step 610a) and the output from the COM connection 70 is inputted to the one side output 30a (Step 610b).

If the direction from which the access processing order signal is transmitted at the step 609 is the logical other side, the output from the other side input 40b is inputted to the SVP connection 10 and the COM connection 70 (Step 611a) and the output from the COM connection 70 is inputted to the other side output 30b (Step 611b).

Finally, when the access processing end signal is inputted from the control bus 50a, the process input means 80b goes back to the step 601.

### (9) Process relay means 80c

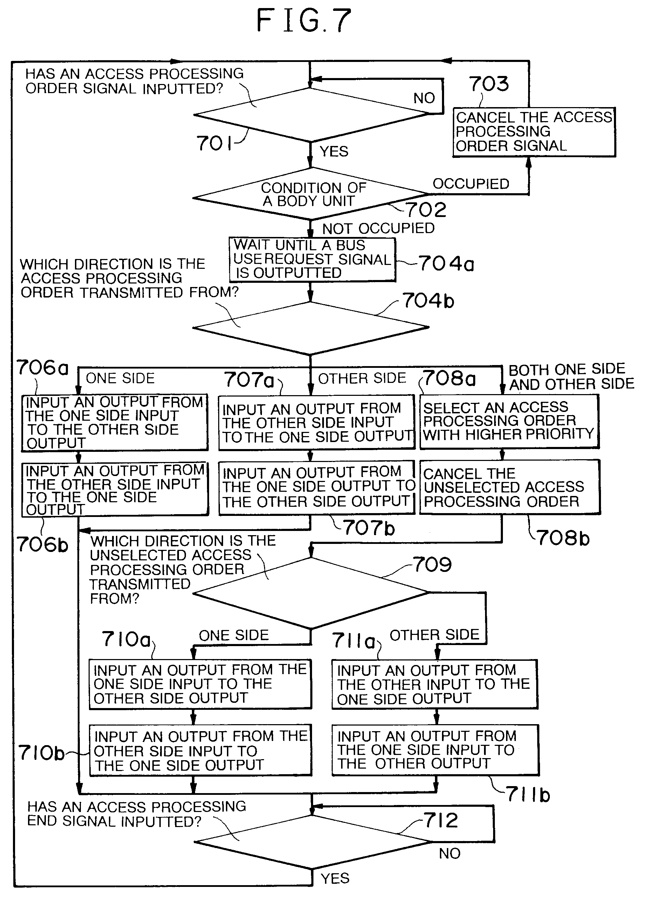

As shown in Fig. 7, a process relay means 80c waits until an access processing order from either transmission direction, i.e., the logical one side or the other side for the information processing unit body COM connected to the other system console interface control unit SCI (Step 701). When the access processing order is inputted at the step 701, the process is determined according to the condition of the body unit COM connected to COM connection 70 (Step 702).

If the body unit COM is occupied at the step 702, the access processing order is canceled (Step 703) and the process relay means 80c goes back to the step 701.

If the body unit COM is not occupied at the step 702, the bus use is requested to the direction logically opposite to the direction from which the access processing order is transmitted (Step 704a). The process relay means 80c then waits for the bus use permission (Step 704b) and the process is determined according to the direction from which the access processing order signal is transmitted when the bus use permission is outputted (Step 705).

If the direction from which the access processing order signal is transmitted at the step 705 is the logical one side, the output from the one side input 40a is inputted to the other side output 30b (Step 706) .

If the direction from which the access processing order signal is transmitted at the step 705 is the logical other side, the output from the other side input 40b is inputted to the one side output 30a (Step 707) .

If the direction from which the access processing order signal is transmitted at the step 705 is both the logical one side and the logical other side, the access processing order transmitted from the direction having a higher priority determined by a certain identification number (Step 708a) is selected and the unselected access processing order is canceled (Step 708b). The process is determined according to the direction from which the selected access processing order signal is transmitted (Step 709).

If the direction from which the access processing order signal is transmitted at the step 709 is the logical one side, the output from the direction input 40a is inputted to the other side output 30b (Step 710a) and the output from the other side input 40b is outputted to the direction output 30a (Step 710b).

If the direction from which the access processing order signal is transmitted at the step 709 is the logical other side, the output from the other side input 40b is inputted to the one side input 30a (Step 711a) and the output from the one side output 40a is outputted to the other side output 30b (Step 711b).

Finally, when the access processing end signal is inputted from the control bus 50a, the process relay means 80c goes back to the step 701.

Furthermore, two examples of an access control in the above mentioned configuration will be described hereinbelow.

The priority order between the system console interface control units SCI is determined as SCI0>SCI1>SCI2>SCI3.

### Example 1: An access control having two service processors which access a same body unit

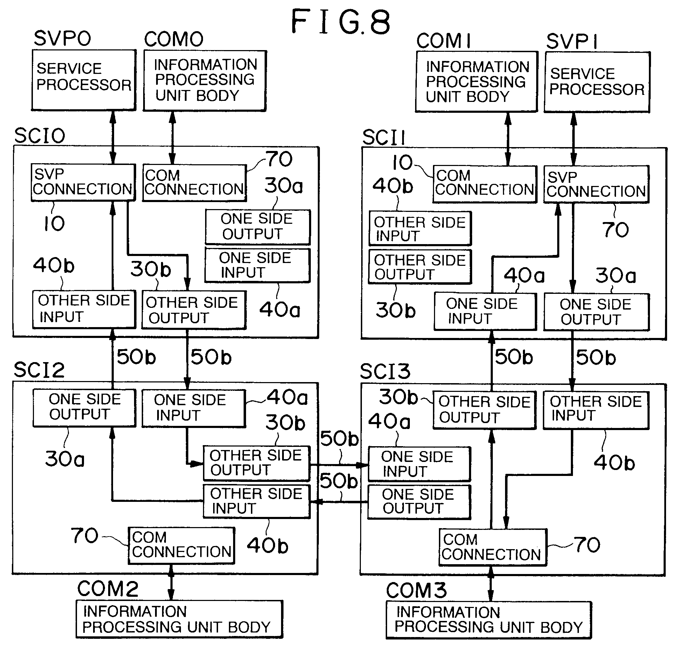

In the example 1, the access processing order (AR0) for the body unit COM 3 is issued from the service processor SVP0 as well as the access processing order (AR1) for the body unit COM 3 from the service processor SVP1 is issued and an exclusive control is necessary.
* SVP0 transmits an access processing order signal to SCI0.
* SVP1 transmits an access processing order signal to the SCI1.
* SCI0 outputs a bus use request signal BR0 to SCI1 and SCI2 .
* SCI1 outputs a bus use request signal BR1 to SCI0 and SCI3.
* As the bus used request signal is transmitted between SCI0 and SCI1, a bus use permission signal for BR0 and BR1 is not outputted so that there is no logical connection between SCI0 and SCI1.
* SCI3 outputs the bus use permission signal to SCI1 side as COM3 is not occupied.
* SCI2 outputs the bus use request signal to SCI3. However, as SCI1 has already outputted the bus use request signal, the bus use request signal from SCI2 is rejected. Also if SCI1 and SCI2 outputs the bus use request signal simultaneously, the bus use request from SCI2 is rejected as SCI1 has a higher priority.
* At this point, the signal flows in the distributed system as shown in Fig. 8.
* When the access processing for COM3 from SVI1 ends, SVP1 outputs an access process end signal to SCI1 and the bus between AM1 and AM3 is released.

### Example 2: an access control having two service processors which respectively access different body units

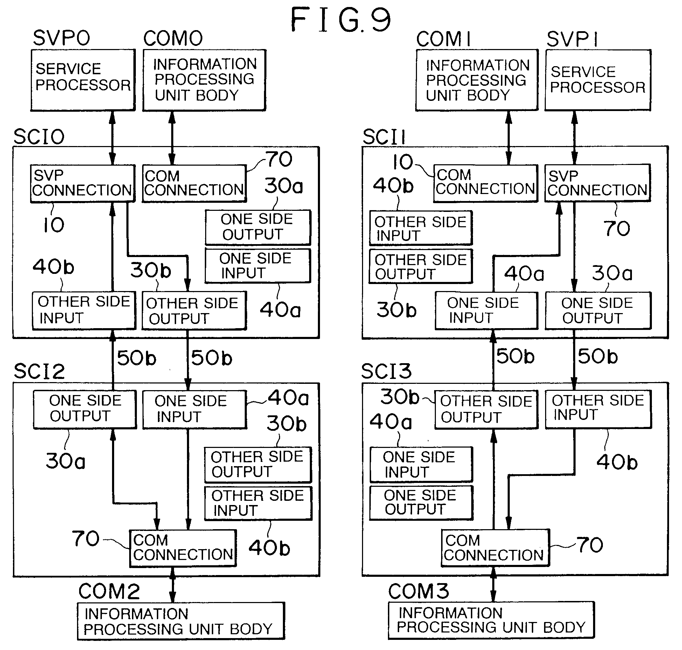

In example 2, the access processing order for COM2 is issued from SVP0 as well as the access processing order for COM 3 from SVP1 is issued and the respective access processing order is processed simultaneously.
* SVP0 transmits an access processing order signal to SCI0.
* SVP1 transmits an access processing order signal to SCI1.
* SCI0 outputs a bus use request signal BR0 to SCI1 and SCI2 .
* SCI1 outputs a bus use request signal BR1 to SCI0 and SCI3.
* As the bus used request signal is transmitted between SCI0 and SCI1, a bus use permission signal for BR0 and BR1 is not outputted so that there is no logical connection between SCI0 and SCI1.
* SCI2 outputs the bus use permission signal to SCI0 side as COM2 is not occupied.
* SCI3 outputs the bus use permission signal to SCI1 side as COM3 is not occupied.
* At this point, the signal flows in the distributed system as shown in Fig. 9.
* When the access processing for COM2 from SVP0 ends, SVP0 outputs an access process end signal to SCI0 and the bus between SCI0 and SCI2 is released.
* When the access processing for COM3 from SVP1 ends, SVP1 outputs an access process end signal to SCI1 and the bus between SCI1 and SCI3 is released.

## Claims

1. An information processing system comprising a plurality of interconnected information processing stations (SVP, SCI, COM), each processing station comprising an information processing section (COM), for processing data, and an interface unit (SCI), for interconnecting the processing stations, at least one of the processing stations further comprising a service unit (SVP) to provide a service for the information processing sections, characterised in that the information processing unit stations are interconnected by bus means (50) in such a way as to form a closed loop, enabling the or each service unit (SVP) to communicate with any one of the information processing sections (COM).

2. An information processing system comprising a plurality of information processing units, said one information processing unit comprising:
an information processing unit body processing predetermined information;
a service processor servicing microprogram loading and error processing for said information processing unit body; and a system console interface control unit connecting said information processing unit body with the service processor of the other information processing unit, said system console interface control unit being connected in a ring fashion to the system console interface control unit of the other information processing unit.

3. An information processing system claimed in Claim 2, wherein said processing means comprises:
process output means for receiving an access processing order for the information processing unit body of the other information processing unit from said service processor, for requesting a bus-use to two transmission directions of logical one side and an other side, and for proceeding an access processing by the transmission direction which first permits a bus-use;
processing input means for receiving an access processing order for said information processing unit body from at least an either direction of logical one direction and an other direction, and for proceeding said access processing by the direction from which said access processing order is transmitted; and
process relay means for receiving said access processing order for said information processing unit body from at least an either direction of said logical one direction and said other direction, for requesting said bus-use to a direction logically opposite to a direction from which said access processing order is transmitted, and for relaying to process said access processing when said bus-use is allowed.

4. An information processing system claimed in Claim 2, wherein said system console interface control unit is given certain identification number, to determine a priority order between one and the other system console interface control units based on said identification number so that said process input means give priority to the access processing order transmitted from the system console interface control unit having a higher priority when receiving simultaneously said access processing order from two directions of logical one side and an other side.

5. An information processing system claimed in Claim 2, wherein said processing input means give priority to the access processing order transmitted from logical one side when receiving simultaneously said access processing order from two directions of logical one side and an other side.

6. An information processing system claimed in Claim 2, wherein said process input means give priority to the access processing order transmitted from a logical other side when receiving simultaneously said access processing order from two directions of logical one side and an other side.
